# EUROPÄISCHE PATENTSCHRIFT

(11) **EP 1 777 027 B1**
(45) Veröffentlichungstag und Bekanntmachung des Hinweises auf die Patenterteilung: **28.05.2008**
(21) Anmeldenummer: 05109903.4
(22) Anmeldetag: 24.10.2005
(51) Int. Cl.: B23C 5/10

(54) **Fräswerkzeug zum Schruppen von Werkstücken**
Milling cutter for roughing of workpieces
Fraise pour l'ébauche de pièces à usiner

(43) Veröffentlichungstag der Anmeldung: 25.04.2007
(73) Patentinhaber: Fraisa Holding AG, 4512 Bellach (CH)
(72) Erfinder: Sichi, Tiziano, 4542, Luterbach (CH); Maushart, Josef, 4500 Solothurn (CH)
(74) Vertreter: BOVARD AG

(56) Entgegenhaltungen:
- WO-A-03/039797
- US-A1- 2005 025 584
- PATENT ABSTRACTS OF JAPAN Bd. 1997, Nr. 06, 30. Juni 1997 (1997-06-30) & JP 09 029530 A (HITACHI TOOL ENG LTD), 4. Februar 1997 (1997-02-04)

## Beschreibung

Die vorliegende Erfindung bezieht sich auf ein Fräswerkzeug zum Schruppen von Werkstücken, welches mit mehreren Schneidflanken und dazwischen angeordneten Spannuten versehen ist, welche Schneidflanken auf der Schneidseite mit Schneidkanten mit einem vorgegebenen Spanwinkel ausgestattet sind und die Schneidkanten ein wellenlinienförmiges Profil aufweisen, welches sich über die Breite der Schneidflanken erstreckt und welches im Bereich der Schneidkante mit einer Fase versehen ist. Ein derartiges Fräswerkzeug ist aus der Patent veröffentlichung JP 09 029 530 A bekannt.

Insbesondere in der HPC-Technologie (High Performance Cutting) ist es das Ziel, dass das Zeitspanvolumen maximiert und damit die Herstellkosten für die Werkstücke reduziert und die Produktivität gesteigert wird. Hierzu werden Fräswerkzeuge verwendet, die aus Hartmetall gefertigt sind, welcher Werkstoff relativ spröde ist. Es werden auch hochlegierte HSS-Werkzeuge verwendet. Wegen der Sprödigkeit der Werkstoffe besteht das Risiko, dass beim Bearbeiten von zähen Werkstoffen ein Ausbrechen der Wellenbergkanten auftritt, was die Leistung dieses entsprechenden Werkstückes stark herabsetzt. Somit ist der Verschleiss von derartigen Fräswerkzeugen relativ gross.

Um dieses Ausbrechen der Wellenberge der Schneidkante zu unterdrücken, sind gemäss dem DE-GM 20 2004 015 757 Vorkehrungen getroffen worden, die darin bestehen, dass ein Spanprofil eingeschliffen wird, das jeweils bis zu der den Spanraum begrenzenden Schneide ausgebildet ist. Dadurch wird erreicht, dass der Verschleiss geringer ist, diese Vorkehrungen haben aber den Nachteil, dass sie in relativ aufwendiger Weise angebracht werden müssen.

In der japanischen Patentveröffentlichung Nr. 09029530 ist ein Werkzeug dargestellt, bei welchem die Schneidkanten durch einen Honvorgang abgerundet sind. Dadurch werde der Verschleiss der Werkzeuge reduziert.

Die Aufgabe der vorliegenden Erfindung besteht somit darin, ein Fräswerkzeug zum Schruppen von Werkstücken so auszugestalten, dass Ausbrechungen im Bereich der Schneidkanten und insbesondere in den Wellenbergen des wellenförmigen Profils möglichst vermieden werden, wobei die Vorkehrungen, die dazu getroffen werden, einen möglichst geringen Aufwand zur Folge haben sollen.

Erfindungsgemäss erfolgt die Lösung dieser Aufgabe dadurch, dass die Fase sich mindestens über die gesamte Höhe der Wellenberge des wellenlinienförmigen Profils erstreckt, welche Fase einen Keilwinkel aufweist, der stumpfer ist als der Keilwinkel des Fräswerkzeugs.

Das Anbringen dieser Fase im wellenlinienförmigen Profil kann in einfacher Weise durch einen einzigen Flachschleifvorgang, jeweils entlang der gekurvten Schneidkante, erhalten werden, was sehr kostengünstig erreicht werden kann. Mit dieser angebrachten Fase wird der Schneidkeil verstärkt, wodurch das Ausbrechen dieser Wellenbergspitzen beim Bearbeitungsvorgang, das heisst beim Schruppen eines Werkstücks, ganz massiv eingeschränkt werden kann. Dadurch wird ein Werkzeug erhalten, mit welchem in effizienter Weise Materialabtragungen vorgenommen werden können und welches sich durch hohe Standzeiten auszeichnet.

Eine weitere vorteilhafte Ausgestaltung der Erfindung besteht darin, dass die geschliffene Oberfläche der Fase eine geringere Rauheit aufweist, als die Oberfläche der Spannuten. Dies hat zur Folge, dass die abgearbeiteten Späne optimal weggeleitet werden.

In vorteilhafter Weise liegt der Spanwinkel der Fase im Bereich von 0° bis -30°, vorzugsweise bei etwa -25°. In diesen Spanwinkelbereichen wird ein optimales Zeitspanvolumen bei gleichzeitig hoher Standzeit erreicht.

In vorteilhafter Weise besteht das Fräswerkzeug aus einem Hartmetall, wodurch grosse Vorschubgeschwindigkeiten erhalten werden können.

Eine Ausführungsform der Erfindung wird nachfolgend anhand der beiliegenden Zeichnung beispielhaft näher erläutert.

Es zeigt
Fig. 1 eine Ansicht auf ein erfindungsgemässes Fräswerkzeug;
Fig. 2a eine räumliche Darstellung dieses erfindungsgemässen Fräswerkzeugs;
Fig. 2b eine vergrösserte Darstellung des in Fig. 2a einkreisten Bereichs des erfindungsgemässen Fräswerkzeugs; und
Fig. 3 eine Teilansicht des Schnitts entlang Linie A-A gemäss dem in Fig. 1 dargestellten erfindungsgemässen Fräswerkzeug.

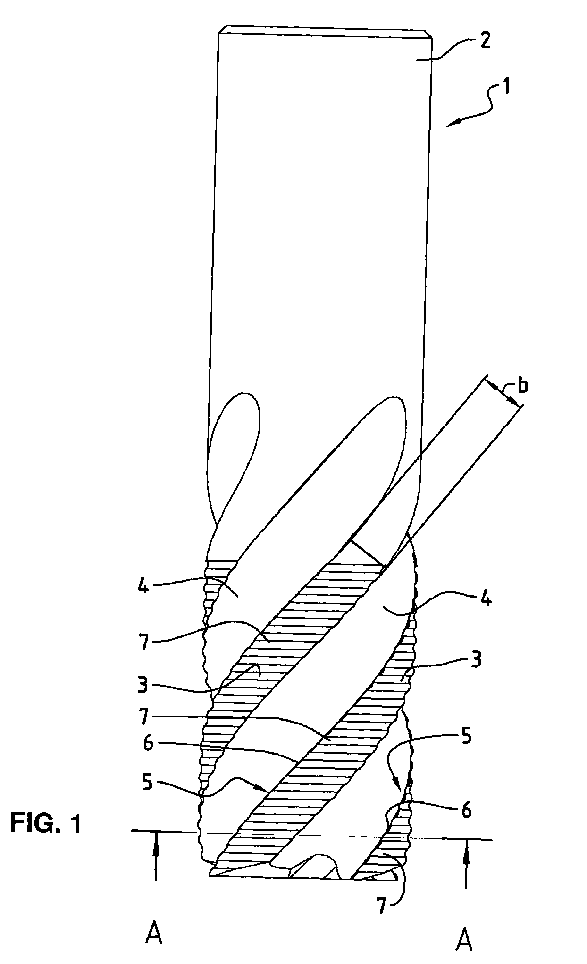

In Fig. 1 ist ein Fräswerkzeug 1 zum Schruppen von Werkstücken dargestellt, das einen zylindrischen Schaft 2 umfasst. Im unteren Bereich ist dieser zylindrische Schaft 2 mit Spannuten 4 ausgestattet, zwischen den Spannuten 4 befinden sich die Schneidflanken 3. In bekannter Weise sind die Spannuten 4 und demzufolge die Schneidflanken 3 spiralförmig angeordnet. Die Schneidflanken 3 sind auf der Schneidseite 5 mit Schneidkanten 6 versehen, die mit einem vorgegebenen Spanwinkel ausgestattet sind. Die Schneidkanten 6 weisen ein wellenlinienförmiges Profil 7 auf, welches sich über die Breite b der Schneidflanken 3 erstrecken. Derartige wellenlinienförmige Profile sind beispielsweise unter der Bezeichnung "NRF", "NRC", "NR", "WRC" oder "NF" bekannt.

In bekannter Weise lässt sich dieses Fräswerkzeug mit dem zylinderförmigen Schaft 2 in eine entsprechende Werkzeugmaschine einspannen, das Werkstück kann nachher durch den Schruppfräsvorgang bearbeitet werden.

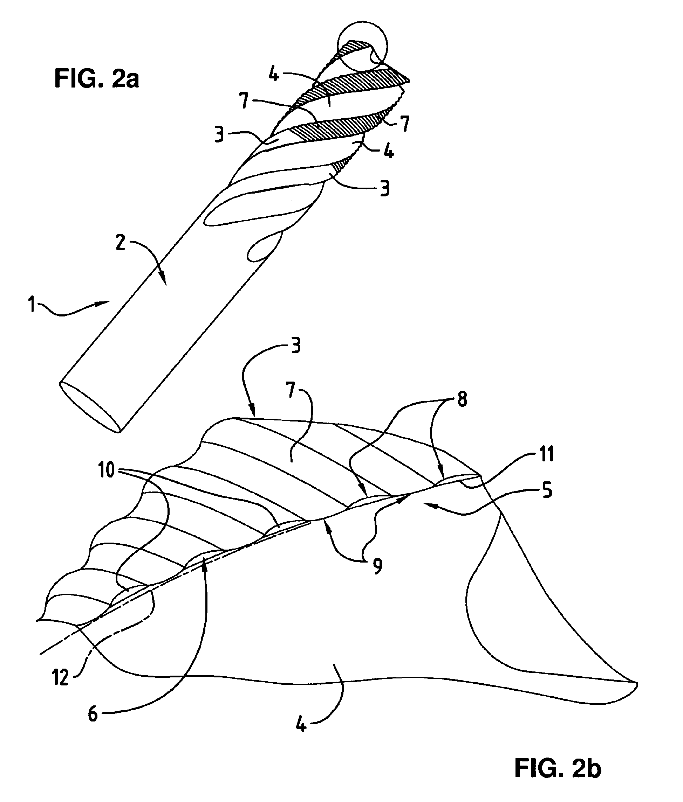

Fig. 2a zeigt in räumlicher Darstellung das erfindungsgemässe Fräswerkzeug gemäss Fig. 1 mit dem zylindrischen Schaft 2, den Schneidflanken 3, den Spannuten 4 und dem wellenlinienförmigen Profil 7. Die Spitze dieses Werkzeugs 1, die in Fig. 2a eingekreist ist, ist in Fig. 2b vergrössert dargestellt.

In dieser Fig. 2b ist ein Teil einer Schneidflanke 3 ersichtlich, auf welcher sich das wellenlinienförmige Profil 7 erstreckt. Ebenfalls ersichtlich ist ein Teil einer Spannut 4. Auf der hier dargestellten Schneidseite 5 der Schneidflanke 3 ist die Schneidkante 6 ersichtlich. Die Schneidkante 6 weist wegen des wellenlinienförmigen Profils 7 auf der Schneidflanke 3 eine Wellenlinienform auf mit Wellenbergen 8 und Wellentälern 9. Im oberen Bereich der Wellenberge 8 ist eine Fase 10 angeschliffen, welche später noch im Detail beschrieben wird. Mit ausgezogener Linie 11 ist das Ausführungsbeispiel dargestellt, bei welchem sich die Fase 10 nur im oberen Bereich der Wellenberge 8 befindet. Auf der linken Seite in Fig. 2b ist mit strichpunktierter Linie 12 das Ausführungsbeispiel dargestellt, bei welchem sich die Fase 10 über die gesamte Höhe der Wellenberge 8 erstreckt. Es ist auch denkbar, dass die Fasenbreite grösser gewählt wird als die Höhe der Wellenberge. Die Fasengrundlinie befindet sich dann unterhalb der Wellentäler in der Spannut 4.

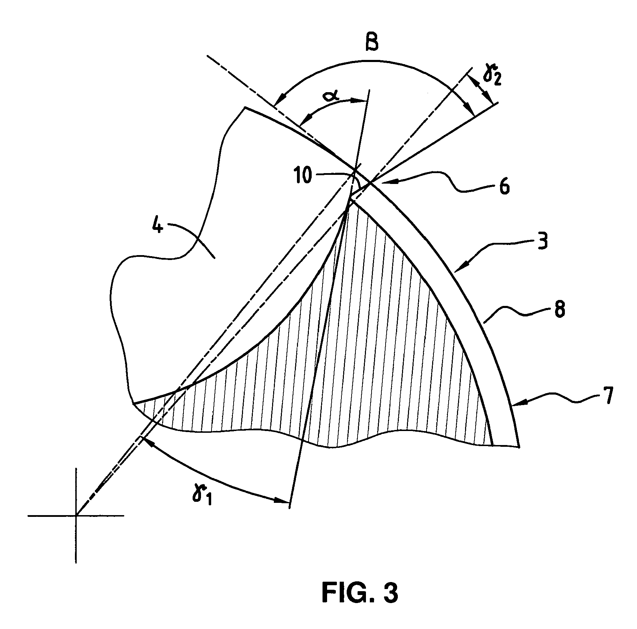

Aus der Schnittdarstellung gemäss Fig. 3 ist im dargestellten Ausschnitt die Spannut 4 ersichtlich sowie die Schneidflanke 3 mit der Schneidkante 6. Ebenfalls ersichtlich ist ein Wellenberg 8 und ein Wellental 9 des wellenlinienförmigen Profils 7, welches sich über die gesamte Schneidflanke 3 erstreckt. In Fig. 3 ist auch die Fase 10 ersichtlich, mit welcher die Wellenberge 8 im Bereich der Schneidkante 6 ausgestattet sind.

In Fig. 3 ist ebenfalls der Spanwinkel γ₁ der Schneidflanke des Fräswerkzeugs ersichtlich, wenn keine Fase 10 angebracht wäre. Der Winkel γ₂ zeigt den Spanwinkel der an den Wellenbergen 8 angebrachten Fasen 10. Der Keilwinkel α, den das Fräswerkzeug aufweist ohne die angebrachte Fase, ist ebenfalls dargestellt. Zudem ist der Keilwinkel β ersichtlich, den das Werkzeug mit der angeschliffenen Fase 10 bildet. Somit ist hier erkennbar, dass der Keilwinkel β mit der Fase 10 stumpfer ist als der Keilwinkel α, den das Fräswerkzeug aufweist ohne diese Anfasung.

Wie aus der Fig. 2b und insbesondere der Fig. 3 ersichtlich ist, lässt sich diese Fase 10 mit einem einzigen Flachschleifvorgang entlang der Schneidkante 6 herstellen. Hierbei wird die Oberfläche der Fase sehr fein geschliffen, so dass sie üblicherweise eine geringere Rauhtiefe aufweist, als die Oberfläche der Spannuten, wodurch ein optimales Abgleiten der am Werkstück abgearbeiteten Späne erreicht wird. Denkbar ist auch, dass die Rauhtiefe der geschliffenen Fasenoberfläche und der geschliffenen Oberfläche der Spannuten praktisch gleich und sehr gering sind. Die Herstellung dieser Fase 10 ist sehr einfach und somit kostengünstig.

Mit dieser Anfasung der Wellenberge erreicht man, dass das Fräswerkzeug zum Schruppen von Werkstücken an den Schneidkanten verstärkt wird, was zur Folge hat, dass die sonst bekannten Ausbrüche insbesondere im Bereich der Spitzen der Wellenberge wesentlich unterbunden werden können. Damit erhält man ein Fräswerkzeug, das effizienter ist, da die Belastungen an das Werkzeug vergrössert werden können, und das auch sehr einfach und demzufolge kostengünstig hergestellt werden kann.

## Patentansprüche

1. Fräswerkzeug zum Schruppen von Werkstücken, welches mit mehreren Schneidflanken (3) und dazwischen angeordneten Spannuten (4) versehen ist, welche Schneidflanken (3) auf der Schneidseite (5) mit Schneidkanten (6) mit einem vorgegebenen Spanwinkel (γ₁) ausgestattet sind und die Schneidkanten (6) ein wellenlinienförmiges Profil (7) aufweisen, welches sich über die Breite der Schneidflanken (3) erstreckt und welches im Bereich der Schneidkante mit einer Fase (10) versehen ist, **dadurch gekennzeichnet, dass** die Fase (10) sich mindestens über die gesamte Höhe der Wellenberge (8) des wellenlinienförmigen Profils (7) erstreckt und welche Fase (10) einen Keilwinkel (β) aufweist, der stumpfer ist als der Keilwinkel (α) des Fräswerkzeugs (1).

2. Fräswerkzeug nach Anspruch 1, **dadurch gekennzeichnet, dass** die Fase (10) durch ein flaches Überschleifen der Wellenberge (8) erreichbar ist.

3. Fräswerkzeug nach Anspruch 1 oder 2, **dadurch gekennzeichnet, dass** die geschliffene Oberfläche der Fase (10) eine geringere Rauheit aufweist, als die Oberfläche der Spannuten (4).

4. Fräswerkzeug nach einem der Ansprüche 1 bis 3, **dadurch gekennzeichnet, dass** der Spanwinkel (γ₂) der Fase (10) im Bereich von 0° bis -30°, vorzugsweise bei etwa -25°, liegt.

5. Fräswerkzeug nach einem der Ansprüche 1 bis 4, **dadurch gekennzeichnet, dass** dieses aus Hartmetall besteht.

## Claims

1. Milling tool for roughing workpieces, which is provided with a plurality of cutting faces (3) and flutes (4) disposed in between, which cutting faces (3) are provided on the cutting side (5) with cutting edges (6) having a predetermined rake angle (γ₁), and the cutting edges (6) have a sinuous profile (7) that extends over the width of the cutting faces (3), and is provided with a bevel (10) in the region of the cutting edge, **characterised in that** the bevel (10) extends at least over the entire height of the crest (8) of the sinuous profile (7) and which bevel (10) has a wedge angle (β) which is more obtuse than the wedge angle (α) of the milling tool (1).

2. Milling tool according to claim 1, **characterised in that** the bevel (10) is achievable by way of a smooth subsequent grinding of the crest (8).

3. Milling tool according to claim 1 or 2, **characterised in that** the ground surface of the bevel (10) has less roughness than the surface of the flutes (4).

4. Milling tool according to one of the claims 1 to 3, **characterised in that** rake angle (γ₂) of the bevel (10) lies in the range of 0° -30°, preferably at about -25°.

5. Milling tool according to one of the claims 1 to 4, **characterised in that** this tool is made of carbide.

## Revendications

1. Fraise pour l'ébauche de pièces à usiner, qui est munie de plusieurs flancs de coupe (3) et de goujures intercalées (4), les flancs de coupe (3) qui sont munis sur la face de coupe (5) de bords de coupe (6) avec un angle d'attaque (y₁) et les bords de coupes (6) présentant un profilé ondulé (7), qui s'étend sur la largeur des flancs de coupe (3) et qui est muni dans la zone du bord de coupe d'un listel (10), **caractérisée en ce que** le listel (10) s'étend au moins sur l'ensemble de la hauteur des sommets d'ondulations (8) du profilé ondulé (7) et listel (10) qui présente un angle de taillant (β) qui est plus obtus que l'angle de taillant (α) de la fraise (1).

2. Fraise selon la revendication 1, **caractérisée en ce que** le listel (10) est accessible par un meulage à plat des sommets d'ondulations (8).

3. Fraise selon la revendication 1 ou 2, **caractérisée en ce que** la surface meulée du listel (10) présente une rugosité inférieure à celle de la surface des goujures (4).

4. Fraise selon l'une des revendications 1 à 3, **caractérisée en ce que** l'angle d'attaque (y₂) du listel est compris entre 0° et -30° de préférence - 25°.

5. fraise selon l'une des revendications 1 à 6, **caractérisée en ce qu'**elle se compose de métal dur.
